# NEW EUROPEAN PATENT SPECIFICATION

(11) **EP 1 034 076 B2**
(45) Date of publication and mention of the opposition decision: **15.12.2010**
(45) Mention of the grant of the patent: 11.02.2004
(21) Application number: 98963757.4
(22) Date of filing: 13.11.1998
(51) Int. Cl.: B32B 27/34, B65D 30/02

(54) **FLEXIBLE CONTAINER OF A MULTILAYER HEAT-SHRINKABLE THERMOPLASTIC FILM**
FLEXIBLE VERPACKUNG AUS EINER HEISSSCHRUMPFFÄHIGEN THERMOPLASTISCHEN MEHRSCHICHTFOLIE
EMBALLAGE FLEXIBLE D'UN FILM THERMOPLASTIQUE MULTICOUCHE THERMORETRACTABLE

(30) Priority: 26.11.1997 EP 97120724; 11.05.1998 EP 98108493
(43) Date of publication of application: 13.09.2000
(73) Proprietor: Cryovac, Inc., Duncan, South Carolina 29334 (US)
(72) Inventor: PALEARI, Mario, I-20010 Pogliano (IT); BUZZI, Giampaolo, I-20020 Arese (IT)
(74) Representative: Fraire, Cristina
(86) International application number: PCT/US1998/024293
(87) International publication number: WO 1999/026783

(56) References cited:
- EP-A- 0 183 512
- EP-A- 0 405 933
- EP-A- 0 465 931
- EP-A- 0 527 237
- EP-A- 0 530 539
- EP-A- 0 530 549
- EP-A- 0 540 293
- EP-A- 0 720 910
- EP-A- 0 755 778
- GB-A- 2 048 775
- NL-A- 8 400 915
- US-A- 4 963 426
- MITSUBISHI GAS CHEMICAL COMPANY, INC: 'MX nylon 6007' 2001,
- BASF: 'specification of ultramid c35' ULTRAMID-MARKEN IN DER FOLIENEXTRUSION October 2001, LUDWIGSHAFEN,
- BAYER POLYMERS: 'specification of polyamid 6 b40 f' APPLICATION TECHNOLOGY INFORMATION no. 5305, 16 June 2003, LEVERKUSEN,
- DUPONT TEIJIN FILMS: 'introduction to mylar polyester films' MYLAR POLYESTER FILM June 2003, HOPEWELL,
- BASF: 'Ultramid B4 Nylon' MATWEB, THE ONLINE MATERIALS DATABASE
- BASF: 'EMS-Grivory Grilon CF6S Nylon Copolymer' MATWEB, THE ONLINE MATERIALS DATABASE

## Description

The present invention relates to a flexible container made of a heat-shrinkable, gas-barrier, multi-layer film.

Heat-shrinkable, oxygen-barrier, thermoplastic films have found many useful applications in the packaging industry for food products (meat, cheese, poultry, etc.).

In general terms, the packaging of food items by means of a heat-shrinkable, gas-barrier, thermoplastic film comprises configuring the heat-shrinkable packaging material, either partially or completely, around a product (e.g. by placing the food item within a bag or pouch fabricated from the film), removing excess air from inside the package (e.g.vacuumizing the bag or pouch), sealing it and thereafter exposing the package to a heat source thereby causing the heat-shrinkable film to shrink and conform with the contours of the packaged food.

These films provide to the packaged foods an attractive appearance and in the mean time protect the packaged product from the environment and prolong the shelf-life of the package product.

These films therefore need to have good gas barrier properties and mainly good sealing properties, in order to guarantee that the atmosphere within the package will not be affected by the atmosphere outside the package; they also need to have high mechanical properties to guarantee that the package will survive the handling involved in the product distribution chain; finally they also need to have good optical properties and good shrink properties to provide the end package with the attractive appearance.

Packaging films with a more-or-less satisfactory balance of the above properties are known in the literature and spread in the market.

A problem that is however often found with the available films is that in the packaging process it is generally necessary to carefully position the packages to be vacuumized and sealed, one close to the other, in the vacuum chamber, so as to avoid any overlapping of the packages. In fact when overlapped or partially overlapped packages are heat-sealed, either it is not possible to get a seal of sufficient seal strength between the innermost heat-sealing layers of each overlapped package or, if the temperature and pressure of the sealing bars are high enough to guarantee sealing through the overlapped webs, sealing of the overlapped outermost layers is also obtained, what leads to a high number of rejects. This also means that in the packaging process the speed of the overall process is limited by the number of packages that, at each sealing cycle, can be positioned, without overlapping, in the vacuum and sealing chamber.

Using bags that can suitably be heat-sealed also when overlapping occurs, without problems of insufficient seal strength and/or sealing or sticking of the outer abuse layers, a higher number of packages could be sealed in each sealing cycle with an increase in the packaging speed. Also, the positioning of the packages in the vacuum and sealing chamber, one along the other with no overlapping, would not be a must thus rendering the presence of an operator dedicated to said positioning, not necessary.

Object of the present invention is therefore to provide a flexible container made of a heat-shrinkable, barrier structure with a good balance of shrink properties, optical properties, and mechanical properties, wherein the heat sealing layer can be heat-sealed to itself at a temperature at which the other outer layer does not stick or seal to itself.

### SUMMARY OF THE INVENTION

The present invention relates to a flexible container made of a heat-shrinkable film comprising at least the following layers:
a) an outer heat-sealing layer comprising a heat-sealable polyolefin,
b) an outer abuse layer comprising a polyamide with melting temperature ≥ 180 °C, and
c) an intermediate layer comprising a polyamide with a melting temperature lower than 165°C,
said container having at least a sealed area formed by the heat-sealing layer a).

In a preferred embodiment of the present invention the film will also comprise a core gas-barrier layer d), e.g. an EVOH comprising gas-barrier layer positioned between the outer abuse layer b) and the intermediate polyamide layer c).

### DEFINITIONS

In this specification and the accompanying claims:
the term "film" refers to a flat or tubular flexible structure of thermoplastic material having a thickness up to about 150 µm;
the term "heat-shrinkable" refers to a film which shrinks by at least 15 % of its original dimensions, in at least one of the longitudinal and transverse directions, when heated to 90°C for 4 seconds. The quantitative determination is carried out according to ASTM D 2732, as set forth in the 1990 Annual Book of ASTM Standards, Vol. 08.02, pp. 368-371;
the phrase "longitudinal direction" or " machine direction", herein abbreviated "MD", refers to a direction "along the length" of the film, i.e., in the direction of the film as the film is formed during extrusion and/or coating;
the phrase "transverse direction", herein abbreviated "TD", refers to a direction across the film, perpendicular to the machine direction;
the phrase "outer layer" refers to any film layer having only one of its principal surfaces directly adhered to another layer of the film;
the phrases "sealing-layer", "heat-sealable layer" and "heat sealing layer", refer to the outer film layer involved in the sealing of the film to itself;
the phrase "abuse layer" and "abuse-resistant layer" refer to the outside layer of the film which is not the sealant layer and which is subject to abuse;
the phrases "inner layer", "intermediate layer", and "internal layer" refer to any film layer having both of its principal surfaces directly adhered to another layer of the film;
the phrase "tie layer" refers to any internal layer having the primary purpose of adhering two layers to one another;
the term "core", and the phrase "core layer" refer to any internal layer which preferably has a function other than serving as a tie or compatibilizer for adhering two layers to one another;
as used herein, the term "barrier", and the phrase "barrier layer", as applied to films and/or layers, is used with reference to the ability of a film or layer to serve as a barrier to one or more gases. In the packaging art, oxygen (i.e., gaseous O₂) barrier layers have, in general, included, for example, ethylene/vinyl alcohol copolymer (polymerized ethylene vinyl alcohol), polyvinylidene chloride (PVDC), polyalkylene carbonate, polyamide, polyethylene naphthalate, polyester, polyacrylonitrile, etc., as known to those of skill in the art. However, in the present invention the O₂-barrier layer preferably comprises either EVOH or polyvinylidene chloride, the PVDC comprising a thermal stabilizer (i.e., HCl scavenger, e.g., epoxidized soybean oil) and a lubricating processing aid, which, for example, comprises one or more acrylates;
the phrase "directly adhered", as applied to film layers, is defined as adhesion of the subject film layer to the object film layer, without a tie layer, adhesive, or other layer there-between. In contrast, as used herein, the word "between", as applied to a film layer expressed as being between two other specific layers, includes both direct adherence of the subject layer between to the two other layers it is between, as well as a lack of direct adherence to either or both of the two other layers the subject layer is between, i.e., one or more additional layers can be imposed between the subject layer and one or more of the layers the subject layer is between.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers.

As used herein, the term "polymer" refers to both homo-polymers and co-polymers as defined above.

As used herein the term "polyolefin" is used with reference to any thermoplastic polymer of simple olefins such as ethylene, propylene, and butene, and co-polymer comprising a major proportion of a simple olefin and a minor proportion of one or more comonomers copolymerisable therewith such as typically another olefin, vinyl acetate, alkyl (meth)acrylate, (meth)acrylic acid, maleic anhydride, and the like, as well as modifications thereof. The term "polyolefin" specifically includes polyethylene, ethylene co-and ter-polymers, polybutene, propylene-butene co- polymer, and the like.

As used herein the terms "polyethylene" and "ethylene homopolymer" identify polymers consisting essentially of an ethylene repeating unit. Depending on the polymerization process employed, polymers with a different degree of branching and a different density can be obtained. Those characterized by a low degree of branching and showing a density higher than 0.940 g/cm³ are called HDPE while those with a higher level of branching and a density up to 0.940 g/cm³ are called LDPE.

As used herein the term "ethylene copolymer" refers to the copolymers of ethylene with one or more other olefins and/or with a non-olefinic comonomer copolymerizable with ethylene, such as vinyl monomers, modified polymers thereof, and the like. Specific examples include ethylene/α-olefin copolymers, ethylene/vinyl acetate copolymers, ethylene/ethyl acrylate copolymers, ethylene/butyl acrylate copolymers, ethylene/methyl acrylate copolymers, ethylene/acrylic acid copolymers, ethylene/methacrylic acid copolymers, ionomer resins, ethylene/alkyl acrylate/maleic anhydride ter-polymers, etc..

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers exhibit a relatively even sequencing of comonomers within a chain, the mirroring of sequence distribution in all chains, and the similarity of length of all chains, and are typically prepared using metallocene, or other single-site type catalysis.

More particularly, homogeneous ethylene/α-olefin copolymers may be characterized by one or more methods known to those of skill in the art, such as molecular weight distribution (Mw/Mn), composition distribution breadth index (CDBI), and narrow melting point range and single melt point behavior.

A homogeneous ethylene/α-olefin copolymer can, in general, be prepared by the copolymerization of ethylene and any one or more α-olefin. Preferably, the α-olefin is a C3-C20 α-mono-olefin, more preferably, a C4-C12 α-mono-olefin, still more preferably, a C4-C8 α-mono-olefin. Still more preferably, the α-olefin comprises at least one member selected from the group consisting of butene-1, hexene-1, and octene-1. Most preferably, the α-olefin comprises octene-1, and/or a blend of hexene-1 and butene-1.

Processes for preparing homogeneous polymers are disclosed in US Patent No. 5,206,075, US Patent No. 5,241,031, and PCT International Application WO 93/03093. Further details regarding the production and use of one genus of homogeneous ethylene/α-olefin copolymers are disclosed in US Patent No. 5,206,075, to Hodgson, Jr.; US Patent No. 5,241,031, to Mehta; PCT International Publication Number WO 93/03093, in the name of Exxon Chemical Company; and PCT International Publication Number WO 90/03414, in the name of Exxon Chemical Patents, Inc.. Still another genus of homogeneous ethylene/α-olefin copolymers is disclosed in US Patent No. 5,272,236, to Lai, et.al., and US Patent No. 5,278,272, to Lai, et.al..

As used herein, the phrase "ethylene/α-olefin copolymers", "ethylene/α-olefin copolymers", refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT™ materials supplied by Exxon, AFFINITY™ and ENGAGE™ materials supplied by Dow, LUFLEXEN™ materials supplied by BASF and TAFMER™ materials supplied by Mitsui Petrochemical Corporation. These materials generally include copolymers of ethylene with one or more comonomers selected from C4 to C10 α-olefins such as butene-1, hexene-1, octene-1, etc..

As used herein the term "modified polyolefin" is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like; as well as of modified polymer obtained by incorporating, into the olefin homopolymer or copolymer, an unsaturated carboxylic acid, e.g. maleic acid, fumaric acid, or the like, or a derivative thereof such as the anhydride, ester or metal salt or the like. Examples of said modified polyolefins are graft copolymers of maleic acid or anhydride onto ethylene/α-olefin copolymers, graft copolymers of fused ring carboxylic anhydrides onto polyethylene, resin mixtures of these and mixtures with polyethylene or ethylene/α-olefin copolymers.

As used herein the term "ethylene-acrylic acid and ethylene-methacryilic acid copolymers" refers to copolymers of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerised therein an alkyl (meth)acrylate, such as n-butyl acrylate or methacrylate or isobutyl acrylate or methacrylate. Said copolymer can be in the free acid form as well as in the ionized or partially ionized form wherein the neutralizing cation can be any suitable metal ion, e.g. an alkali metal ion, a zinc ion or other multivalent metal ions; in this latter case the copolymer is also termed "ionomer".

As used herein the term "ethylene-vinyl acetate copolymer" or "EVA" is intended to refer to a copolymer formed from ethylene and vinyl acetate monomers wherein the ethylene derived units in the copolymer are present in major amounts; preferably between about 60% and 98% by weight and the vinyl acetate derived units in the copolymer are present in minor amounts, preferably between about 2% and about 40% by weight.

As used herein the term "ethylene-alkyl (meth)acrylate copolymers" refers to copolymers of ethylene with alkyl (meth)acrylates, e.g. methyl (meth)acrylate, butyl (meth)acrylate, and iso-butyl (meth)acrylate wherein the ethylene derived units in the copolymer are present in major amounts and the alkyl (meth)acrylate derived units in the copolymer are present in minor amounts, preferably between about 2% and about 28% by weight.

As used herein the term EVOH refers to saponified products of ethylene-vinyl ester copolymers, generally of ethylene-vinyl acetate copolymers, wherein the ethylene content is typically comprised between 20 and 60% by mole and the degree of saponification is generally higher than 85% preferably higher than 95%.

As used herein, the term polyamide is intended to refer to both polyamides and copolyamides. This term specifically includes those aliphatic polyamides or copolyamides commonly referred to as e.g. polyamide 6 (homopolymer based on e- caprolactam), polyamide 66 (homopolycondensate based on hexamethylene diamine and adipic acid), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on hexamethylenediamine and adipic acid and ε-caprolactam), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

Melting information by DSC are reported as second heating data, i.e., the sample is heated at a programmed rate of 10°C/min to a temperature below its critical range, cooled down and then reheated (2^{nd} heating) still at a programmed rate of 10°C/min.

### DETAILED DESCRIPTION OF THE INVENTION

A first object of the present invention is a flexible container made of a heat-shrinkable film comprising at least the following layers:
a) an outer heat-sealing layer comprising a heat-sealable polyolefin,
b) an outer abuse layer comprising a polyamide with melting temperature ≥ 180 °C, and
c) an intermediate layer comprising a polyamide with a melting temperature lower than 165°C.
Said flexible container having at least a sealed area formed by the heat-sealing layer a).

In the flexible container according to the present invention the heat-sealing layer a) may comprise a single polymer or a blend of two or more polymers as known in the art. Preferably the melting point of the polyolefin resin(s) of the heat-sealing layer a) will be < 140 °C, and preferably < 130°C. In a more preferred embodiment it will be comprised between 80°C and 128 °C.

Such a layer may for example comprise heterogeneous or homogeneous ethylene-(C₄-C₈)-α-olefin copolymers having a density ≤ 0.915 g/cm³; blends thereof with minor amount of polyethylene homopolymers; ethylene-vinyl acetate copolymers; ethylene-acrylic or methacrylic acid copolymers including ionomers; blends of heterogeneous or homogeneous ethylene-(C₄-C₈)-α-olefin copolymers having a density from 0.915 g/cm³ to 0.930 g/cm³ with ethylene-vinyl acetate copolymers or ethylene-alkyl (meth)acrylate copolymers; ethylene-propylene-butene ter-polymers; ethylene-alkyl acrylate-maleic anhydride ter-polymers; and the like polymers.

In a preferred embodiment of the present invention the heat-sealing layer a) will comprise a heterogeneous or homogeneous ethylene-(C₄-C₈)-α-olefin copolymer having a density ≤ 0.915 g/cm³, and even more preferably a heterogeneous or homogeneous ethylene-(C₄-C₈)-α-olefin copolymer having a density comprised between 0.895 g/cm³ and 0.912 g/cm³. The Melt Index of said heterogeneous or homogeneous ethylene-(C₄-C₈)-α-olefin copolymer may range from about 0.1 to about 15 g/10' (g/10 min.) (measured by ASTM D-1238, Condition E). However, preferred values are in the range 0.5-10 g/10 (g/10min.) and still more preferred values are in the range 1.0-7.0 g/10' (g/10min).

The resins used in the manufacture of the films for the flexible container according to the present invention, not only in the heat-sealing a) but also, and mainly, in the outer abuse layer b) or in any of the intermediate layers, can be suitably additivated as known in the art in order to improve the properties of the film or the manufacturing process thereof.

As an example the resins may contain stabilizers, anti oxidants, pigments, UV absorbers, cross-linking enhancers or cross-linking inhibitors, anti-fog agents, slip and anti-blocking agents, etc., as conventionally used in this field.

Polyamides for the outer abuse layer b) will have a melting temperature ≥ 180 °C, preferably comprised between 180 °C and 250 °C, and even more preferably comprised between 185 °C and 225 °C.

A preferred group of polyamides suitable for use in the outer abuse layer b) has a melting temperature of from 185 °C to 200 °C and even more preferably from 188 °C to 200 °C. Certain copolyamides 6/12 (such as PA6/12 CR-8 and CR-9 by EMS), certain copolyamides of polyamide 6 and a partially aromatic polyamide (such as Durethan® CI31F and CI31FKS by Bayer) or certain terpolyamides such as those based on polyamide 6, polyamide 11, and polyamide 66, sold by Bayer under the trade name Durethan® KU 2-2153 or KU 2-2153F, are suitable examples of this group of polyamides.

Another preferred group of polyamides suitable for use in the outer abuse layer b) has a melting temperature higher than 200 °C and preferably comprised between 210 °C and 225 °C. Polyamide 6, modified polyamide 6 (such as a polyamide 6 copolymer comprising less than 5%, preferably less than 4%, and even more preferably less than 3 % of an aromatic co-monomer such as terephthalic acid), polyamide 66, polyamide 6/66, and some polyamide 6/12 copolymers, are representative examples of polyamides of this group.

Preferably the outer abuse layer b) will comprise polyamide 6, a modified polyamide 6, a copolyamide of polyamide 6 and a partially aromatic polyamide, a polyamide 66, or a terpolyamide based on polyamide 6, polyamide 11, and polyamide 66.

The outer abuse layer b) will normally contain at least 50 %, generally at least 70 % and preferably at least 85 % of said polyamide. In a preferred embodiment of the present invention the outer abuse layer b) will essentially consist of said polyamide, optionally containing up to 10 %, preferably up to 7 %, and more preferably up to 5 % of a masterbatch of the desired additives in a thermoplastic compatible resin, such as the same or another polyamide resin or any other resin compatible therewith.

The polyamide to be used in intermediate layer c) has a melting temperature lower that 165 °C. Preferably it will have a melting temperature, as measured by DSC, lower than 150 °C, typically comprised between 120°C and 150 °C. Preferred polyamides are polyamides 6/12. Said polyamide can be used alone or blended with one or more other polyamides.

Additional layers, such as for instance shrink layers, comprising resins endowed with good shrink properties, can be present as intermediate layers.

Suitable resins for said additional intermediate layer include for instance ethylene copolymers, particularly ethylene-vinyl acetate copolymers, ethylene-alkyl acrylate copolymers, ethylene-α-olefin copolymers with a very low density, and the like resins.

In a preferred embodiment, and in particular when high gas-barrier properties are required, the film will also comprise an intermediate gas-barrier layer d), typically comprising PVDC or EVOH. In a more preferred embodiment said layer d) will comprise EVOH that may be used alone or optionally blended with the resins and/or additives known in the field. As an example it can be blended with the conventional plasticisers such as crystalline or amorphous polyamides.

Said gas-barrier layer can be positioned either between the outer abuse layer b) and the intermediate layer c) or between the intermediate layer c) and the heat-sealing layer a).

To improve the adhesion between the different layers, tie layers can be present in the structure according to the invention. Tie layers typically comprise a modified polyolefin or preferably a blend of a modified polyolefin with a polyolefin, such as for instance a blend of an acid or anhydride modified EVA with EVA or LLDPE.

In one embodiment of the present invention the film has four layers wherein a tie layer e) is directly adhered to the sealing layer a) and to one of the surfaces of the intermediate layer c), the other surface of the intermediate layer c) being directly adhered to the outer abuse layer b).

In another embodiment the film has five layers wherein e.g. a tie layer e) is directly adhered to the sealing layer a) and to one of the surfaces of the intermediate layer c), the other surface of the intermediate layer c) being directly adhered to one of the surfaces of either a tie layer f) or a gas-barrier layer d), the other surface of which is directly adhered to the outer abuse layer b); or a tie layer f) is present between the outer abuse layer b) and the barrier layer d), or between the outer abuse layer b) and the intermediate layer c), to improve the adhesion between these layers.

In still another embodiment of the present invention the film has six layers wherein the sequence of layers directly adhered one to the other is heat-sealing layer a)/tie layer e)/ intermediate layer c)/gas-barrier layer d)/tie layer f)/outer abuse layer b).

The films used in the flexible container according to the present invention can be manufactured by the so-called trapped-bubble process, which is a widely known process typically used for the manufacture of the heat-shrinkable films for food contact packaging.

According to said process, the multilayer film is co-extruded through a round die to obtain a tube of molten polymer which is quenched immediately after extrusion without being expanded, optionally cross-linked, then heated to a temperature which is above the T_{g} of all the resins employed and below the melting temperature of at least one of the resins employed, typically by passing it through a hot water bath, and expanded, still at this temperature by internal air pressure to get the transversal orientation and by a differential speed of the pinch rolls which hold the thus obtained "trapped bubble" to provide the longitudinal orientation. The film is then rapidly cooled to somehow freeze the molecules of the film in their oriented state and wound.

While in a preferred embodiment of the present invention the film is biaxially oriented and will therefore be heat-shrinkable in both directions, mono-oriented films or preferentially oriented films can be obtained by avoiding or controlling transversal or longitudinal orientation.

Depending on the number of layers in the structure it may be advisable or necessary to split the co-extrusion step : in such a case a tube is first formed of a limited number of layers, generally with heat-sealing layer a) on the inside of the tube; this tube is quenched quickly and before submitting it to the orientation step it is extrusion-coated with the remaining layers, again quenched quickly, optionally cross- linked, and then passed to the orientation. During the extrusion-coating step the tube is slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first extrusion step, or this coating step can be repeated as many times as the layers which are to be added.

In a preferred embodiment the film is however co- extruded.

To produce cross-linking, an extrudate is treated with a suitable radiation dosage of high energy electrons, preferably using an electron accelerator, with the dosage level being determined by standard dosimetry methods.

A suitable radiation dosage of high energy electrons is in the range of up to about 120 kGy, more preferably about 16-80 kGy, and still more preferably about 34-64 kGy.

Other accelerators such as a Van der Graff generator or resonating transformer may be used. The radiation is not limited to electrons from an accelerator since any ionizing radiation may be used.

Irradiation is most preferably performed prior to orientation but it could also be performed after orientation.

Alternatively the film may also be prepared by flat extrusion (co-extrusion or extrusion coating) followed by orientation in one or both directions via tenter-frame. Orientation may be carried out in such a case either sequentially or simultaneously.

In some instances it may be desirable to submit the oriented structure to an annealing step; this typically consists in a controlled heating-cooling treatment that is carried out on the oriented film in order to have better control on low temperature dimensional stability of the shrinkable tubing.

The flexible container of the present invention may be used in the form of a bag or pouch, to form a package in a conventional manner. In a preferred embodiment the film is obtained as a tubular film and, if desired, individual bags are formed by transverse sealing and cutting across the flattened tubular film. Alternatively bags can be made by slitting the tubular film along one edge and then transversely sealing and severing the film to produce bags. Other methods of making bags and packages are known and may be readily adapted to use with the multilayer films of the invention.

Thickness of the film is not a critical parameter. Generally, however, for use in food packaging, a thickness in the range of from about 10 to about 120 µm, preferably from about 15 to about 70 µm, and more preferably of from about 35 to about 50 µm, is employed.

An additional object of the present invention is a product packaged with a heat-shrinkable film comprising at least the following layers:
a) an outer heat-sealing layer comprising a heat-sealable polyolefin,
b) an outer abuse layer comprising a polyamide with melting temperature ≥ 180 °C, and
c) an intermediate layer comprising a polyamide with a melting temperature lower than 165°C,
wherein the outer heat-sealing layer a) is the layer in contact with the product packaged.

The present invention will now be described in more detail with particular reference to the following Examples:

### Example 1

A six layer film has been prepared by coextrusion through a round die, irradiation of the thus obtained thick tubing (primary tape) at a dosage level of 42 kGy and orientation at 95-98°C (about 3X in the longitudinal direction, and about 2.5X in the transverse direction) by the trapped-bubble process. The sequence of layers (from the heat-sealing layer a) to the outer abuse layer b) is as follows:
a)/e)/c)/d)/f)/b)
wherein the resins used for the different layers and, between parentheses, the thickness of each layer are reported below:
a) homogeneous ethylene-octene-1 copolymer - d = 0.899 - 0.905 g/cm³ - m.p. = 98°C (DSC - 2^{nd} heating) - MI = 3 g/10' (g/10 min.) (measured by ASTM D1238 - Condition E (190 °C, 2.16 kg) - Affinity FW 1650 by Dow (19 µm)
e) anhydride grafted and rubber modified LLDPE - Tymor 1203 by Morton (4 µm)
c) polyamide 6/12 copolymer based on 40 % by mole ε-caprolactam and 60 % by mole of laurolactam - m.p. = 127 °C (DSC - 2^{nd} heating) - Grilon CA 6E by EMS (7.5 µm)
d) EVOH (44 mol % ethylene) - EVAL EP-105A by Marubeni (4 µm)
f) anhydride grafted and rubber modified LLDPE - Tymor 1203 by Morton (4 µm)
b) polyamide 6 copolymer (polycaprolactam containing about 1 % terephthalic acid comonomer) - m.p. = 213°C (DSC - 2^{nd} heating) - Sniamid F36T/S by Caffaro (7.5 µm).

### Example 2

A six layer film having the same sequence described in Example 1 has been prepared by the same method described in the foregoing Example but avoiding the irradiation step.

### Example 3

A six layer film has been prepared essentially as described in Example 1 but replacing the polyamide copolymer used for the outer abuse layer b) with polyamide 6 with m.p. = 228°C (DSC- 2^{nd} heating) - Sniamid ADS40F by Caffaro.

### Example 4

A six layer film has been prepared essentially as described in Example 1 but replacing the resins used for the heat-sealing layer a) and for the tie layer e) with the following ones:
a) heterogeneous ethylene-octene-1 copolymer - d = 0.911 g/ cm³ - m.p. = 101.5°C (DSC- 2^{nd} heating) - MI = 7 g/10' (g/10min.) (measured by ASTM D1238-Condition E (190°C, 2.16 kg) - Stamylex 08-076F by DSM
e) maleic anhydride grafted LLDPE - Admer NF530E by Mitsui

### Example 5

A six layer film has been prepared essentially as described in Example 4 but replacing the resin used for the tie layer e) with the following one :
e) acid/acrylate modified ethylene vinyl acetate - Bynel 3101 by DuPont.

### Example 6

A six layer has been prepared essentially as described in Example 1 but replacing the resin used for the heat-sealing layer a) with the following one:
a) heterogeneous ethylene-octene-1 copolymer - d = 0.910 g/cm³ - m.p. = 101.5°C (DSC- 2^{nd} heating) - MI = 2.2 g/10' (g/10min.) (measured by ASTM D1238 - Condition E (190°C, 2.16 kg) - Stamylex 08-026F by DSM.

### Example 7

A six layer film has been prepared essentially as described in Example 2 but replacing the resin used for the heat-sealing layer a) with the following one:
a) homogeneous ethylene-octene-1 copolymer - d = 0.895 g/cm³ - m.p. = 92°C (DSC- 2^{nd} heating) - MI = 1.6 g/10' (measured by ASTM D1238 - Condition E (190°C, 2.16 kg) - Affinity PF 1140 by Dow,
and increasing the thickness of said layer a) to 22 µm while reducing that of the intermediate layer b) to 4 µm.

### Examples 8 and 9

Two six layer films have been prepared essentially as described in Example 1 but adding to the resin used for the outer abuse layer b), 4 wt. % of a masterbatch of slip and antiblocking agents in a polyamide 6/12 copolymer with m.p. ≈ 190 °C (Grilon 3476FS by ESM - Example 8) or in a polyamide 6/12 copolymer with m.p. ≈ 135 °C (Grilon 7361FS by EMS - Example 9).

### Example 10

A six layer film has been prepared essentially as described in Example 2 but replacing the resin used for the outer layer b) with a blend of 30 wt. % of polyamide 6/12 copolymer based on 40 % by mole ε-caprolactam and 60 % by mole of laurolactam (m.p. = 127 °C (DSC- 2^{nd} heating) - Grilon CA 6E by EMS) and 70 wt.% of polyamide 6 copolymer (polycaprolatam containing about 1 % terephthalic acid comonomer) (m.p. = 213 °C (DSC- 2^{nd} heating) - Sniamid F36T/S by Caffaro).

### Example 11

A six layer film has been prepared essentially as described in Example 2 but replacing the resin used for the outer layer b) with a blend of 30 wt. % of polyamide 6/12 copolymer based on 40 % by mole ε-caprolactam and 60 % by mole of laurolactam (m.p. = 127 °C (DSC- 2^{nd} heating) - Grilon CA 6E by EMS) and 70 wt.% of polyamide 6 homopolymer (Sniamid ADS40F by Caffaro).

### Example 12

A six layer film has been prepared by coextrusion through a round die, irradiation of the thus obtained thick tubing (primary tape) at a dosage level of 42 kGy and orientation at 95-98°C (about 3X in the longitudinal direction, and about 2.5X in the transverse direction) by the trapped-bubble process. The sequence of layers (from the heat-sealing layer a) to the outer abuse layer b) is as follows:
a)/e)/c)/d)/f)/b)
wherein the resins used for the different layers and, between parentheses, the thickness of each layer are reported below:
a) homogeneous ethylene-octene-1 copolymer - d = 0.899 - 0.905 g/cm³ - m.p. = 98°C (DSC - 2^{nd} heating) - MI = 3 g/10' (g/10min.) (measured by ASTM D1238 - Condition E (190 °C, 2.16 kg) - Affinity™ FW 1650 by Dow (19 µm)
e) anhydride grafted and rubber modified LLDPE - Tymor™ 1203 by Morton (4 µm)
c) polyamide 6/12 copolymer based on 40 % by mole ε-caprolactam and 60 % by mole of laurolactam - m.p. = 127 °C (DSC - 2^{nd} heating) - Grilon™ CA 6E by EMS (7.5 µm)
d) EVOH (44 mol % ethylene) - EVAL™ EP-105A by Marubeni (4 µm)
f) anhydride grafted and rubber modified LLDPE - Tymor™ 1203 by Morton (4 µm)
b) co-polyamide 6/61 - m.p. = 188-190 °C (DSC - 2^{nd} heating) - Durethan™ CI31F by Bayer (7.5 µm).

### Example 13

A six layer film is prepared essentially as described in Example 12 but replacing the polyamide copolymer used for the outer abuse layer b) with a ternary copolyamide based on polyamide 6, polyamide 11, and polyamide 66 with m.p. = 191 °C (DSC- 2^{nd} heating) - Durethan™ Ku 2-2153 by Bayer.

### Example 14

A six layer film is prepared essentially as described in Example 12 but replacing the resin used for the outer abuse layer b) with a co-polyamide 6/12 with m.p. = 190 °C ((DSC- 2^{nd} heating) - CR-8 by EMS.

The properties of the films have been evaluated by submitting the films to the tests indicated below.

% Unrestrained linear shrinkage : the percent free shrink, i.e. the irreversible and rapid reduction, as a percent, of the original dimensions of a sample subjected to a given temperature under conditions where nil restraint to inhibit shrinkage is present, has been measured according to ASTM D2732, by immersing for 4 seconds specimens of the structures to be tested (100 mm x 100 mm) into a bath of a hot water (at three different temperatures : 80 °C, 85°C and 90 °C). This attribute has been measured in the longitudinal direction (LD) as well as in the transversal direction (TD).

Haze : haze is defined as that percentage of transmitted light which in passing through the specimen deviates from the incident beam by forward scattering, and it has been measured by ASTM D 1003 (Procedure A).

Gloss : the specular gloss of the films, i.e. the relative luminous reflectance factor of a specimen in the mirror direction has been measured using ASTM 2457 - 90 with a gloss angle of 60°.

Modulus : the ratio of the tensile stress to corresponding strain below the proportional limit in MPa (kg/cm²); measured by ASTM D 882.

Tensile : a measure of the force required at constant elongation to break a specimen of the film in MPa (kg/cm²); measured by ASTM D 882.

Elongation : a measure of the percent extension required to break a specimen of the film (%); measured by ASTM D 882.

Puncture resistance : the puncture resistance is the resistance force arising when pushing a punch against a surface of flexible film. There is not a standard test method to measure this attribute. The test method used in the present evaluations is described briefly herein below : a film sample (6.5 cm x 6.5 cm) is fixed in a specimen holder connected to a compression cell (1-50 kg normal sensitivity) mounted on a dynamometer (an Instron tensile tester); when the dynamometer is started, a punch (a punching sphere, 5-mm in diameter, soldered on a plunger) is brought against the film sample at a constant speed (30 cm/min.) and the force needed to puncture the sample is graphically recorded.

In-line abuse resistance : the capability of the tested structures to withstand without breakage the in-line packaging operations, i.e. loading, vacuumizing, sealing, shrinking, and collecting the products through an idle roll conveyor, is defined as "in-line abuse resistance". Scope of this test is to provide a method to discriminate and rank bags of different structure at a laboratory level as to this aspect. The procedure to test this property is therefore devised so as to simulate as much as possible the most drastic conditions which might actually occur in the packaging lines. To perform this test, the bags to be examined are filled with metal blocks, vacuumized, sealed and shrunk on an industrial packaging line. The thus obtained packages are then checked for leakers and the in-line abuse resistance is evaluated by the % of rejects. Due to the harsh conditions purposely employed this number is typically high but, as indicated above, this test has not an absolute but only a relative meaning and its aim is to indicate whether a given structure is expected to have more or less abuse resistance of a standard bag used as comparison, when used at the customer plant.

The % Shrink, Haze, Gloss, Modulus, Tensile and Elongation of some representative structures of the present invention are reported on Table 1.

**TABLE 1**

| | | Structure of Example no. | | |
|---|---|---|---|---|
| | | 1 | 2 | 13 |
| % Shrink | | | | |
| | 80 °C LD | 22 | 20 | 30 |
| | 80 °C TD | 21 | 20 | 29 |
| | 85 °C LD | 25 | 23 | 35 |
| | 85 °C TD | 25 | 24 | 35 |
| | 90 °C LD | 29 | 27 | 40 |
| | 90 °C TD | 29 | 28 | 40 |
| Haze | | 7.7 | 6.7 | |
| Gloss | | 114 | 106 | |
| Modulus | | | | |
| | LD | 795.2 (8106) | 751.2 (7657) | |
| | TD | 774.2 (7892) | 787.4 (8027) | |
| Tensile | | | | |
| | LD | 74.4 (758) | 71.9 (733) | |
| | TD | 75.2 (767) | 75.1 (766) | |
| Elongation | | | | |
| | LD | 94 | 93 | |
| | TD | 180 | 175 | |

The results of the Puncture resistance and In-line abuse resistance tests for some representative structures of the present invention are reported in Table II below.

The bags used for the in-line abuse resistance tests were, 165 mm x 230 mm, end sealed bags. For comparative purposes the results obtained with a commercially available bag, 58 µm thick, sold by Cryovac ® as BB4L, are reported in the third column.

**TABLE II**

| | Structure of Example no | | Cryovac® BB4L |
|---|---|---|---|
| | 1 | 2 | |
| Puncture (kg) 90°C | 2.7 | 2.8 | 0.5 |
| In-line abuse % Rejects | 61 | 44 | 67 |
| n.a.=not available | | | |

The sealing properties of the films of Examples 1, 2 and 13 have been tested by evaluating the seal strength and the integrity of packages obtained by an overlapped sealing. An internal procedure has been developed to evaluate the ability of a heat-shrinkable bag to maintain seal hermeticity and integrity (i.e. no delamination) when submitted to a non standard sealing cycle. As used herein "non standard sealing cycle" is intended to refer to the case where, in the packaging cycle, the bags filled with the product to be packaged are placed inside a vacuum sealing chamber machine mispositioned (i.e. at least partially overlapped). As indicated above, in an industrial packaging cycle, this may happen, in particular when the positioning of the bags in the vacuum sealing chamber is not controlled by an operator, or this may be done on purpose in order to increase the output per sealing cycle.

This test on overlapped sealability has been carried out on a Cryovac® VSC 75 vacuum sealing machine set with a vacuum time of 20 s, a cooling time of 4 s, a sealing bar pressure of 1 bar and an adjustable impulse time. The test is a comparative test and the results obtained are compared to a standard that is represented by the same bag used however in a standard sealing cycle where the bag is correctly positioned inside the vacuum sealing chamber making sure that no overlap occurs, and the same sealing conditions are applied.

In particular for each formulation two empty end-seal bags (230 mm width) obtained by transverse seal and cut of the oriented tubing, are placed in the center of the sealing bar overlapped one on the other by half of their width in order to simulate a non standard sealing cycle. The shrink bags are vacuumized and sealed at the pre-selected conditions. At the end of the cycle, the two shrink bags are slowly separated, one from the other, by tearing them apart along the seal seam. The seals are then visually checked for seal hermeticity and integrity (no delamination). The tests are then repeated at different impulse sealing times and the range of impulse times that allows to obtain reliable seals without rejects in case of non standard sealing cycle is determined. With the films of Examples 1, 2 and 13, the package hermeticity and integrity characteristics were maintained despite the non standard packaging cycle at all the tested impulse times, from 1.2 to 2.4 s.

## Claims

1. A flexible container made of a heat-shrinkable film comprising
a) an outer heat-sealing layer comprising a heat-sealable polyolefin,
b) an outer abuse layer comprising a polyamide with a melting temperature ≥ 180°C, and
c) an intermediate layer comprising a polyamide with a melting temperature lower than 165 °C,
said container having at least a sealed area formed by the heat-sealing layer a).

2. The flexible container of claim 1 in the form of a bag or a pouch.

3. A product packaged with a heat shrinkable film comprising
a) an outer heat-sealing layer comprising a heat-sealable polyolefin,
b) an outer abuse layer comprising a polyamide with a melting temperature ≥ 180°C, and
c) an intermediate layer comprising a polyamide with a melting temperature lower than 165 °C,
wherein the outer heat-sealing layer a) is the layer in contact with the product packaged.

4. The flexible container of claim 1 or the packaged product of claim 3 wherein the polyamide of the outer abuse layer b) of the heat-shrinkable film has a melting temperature of from 180 °C to 200 °C, preferably of from 185 °C to 200 °C and even more preferably of from 188 °C to 200 °C.

5. The flexible container or the packaged product of claim 4 wherein the outer abuse layer b) of the heat-shrinkable film comprises a polyamide selected from the group consisting of copolyamides 6/12, copolyamides of polyamide 6 and a partially aromatic polyamide and ternary copolyamides based on polyamide 6, polyamide11, and polyamide 66.

6. The flexible container of claim 1 or the packaged product of claim 3 wherein the polyamide of the outer abuse layer b) of the heat-shrinkable film has a melting temperature higher than 200 °C, preferably comprised between 200 °C and 250 °C, and more preferably comprised between 210 °C and 225 °C.

7. The flexible container or the packaged product of claim 6 wherein the outer abuse layer b) of the heat-shrinkable film comprises a polyamide selected from the group consisting of polyamide 6, copolymers of polyamide 6 comprising less than 5 % of an aromatic comonomer (modified polyamide 6), polyamide 66, polyamides 6/66, and polyamides 6/12.

8. The flexible container or the packaged product of claim 7 wherein the outer abuse layer b) of the heat-shrinkable film comprises a polyamide selected from the group consisting of polyamide 6, modified polyamide 6), and polyamide 66.

9. The flexible container of claim 1 or the packaged product of claim 3 wherein the outer abuse layer b) of the heat-shrinkable film contains at least 50 %, preferably at least 70 %, and more preferably at least 85 % of a polyamide with a melting temperature ≥ 180 °C.

10. The flexible container of claim 1 or the packaged product of claim 3 wherein the heat-sealing layer a) of the heat-shrinkable film comprises a single polyolefin or a blend of two or more polyolefins with melting temperature < 140 °C, preferably < 130 °C, and more preferably comprised between 80 °C and 128 °C.

11. The flexible container or the packaged product of claim 10 wherein the heat-sealing layer a) of the heat-shrinkable film comprises heterogeneous or homogeneous ethylene-(C₄-C₈)-α-olefin copolymers having a density ≤ 0.915 g/cm³, blends thereof with minor amount of polyethylene homopolymers, ethylene-vinyl acetate copolymers, ethylene-acrylic or methacrylic acid copolymers, including ionomers, blends of heterogeneous or homogeneous ethylene-(C₄-C₈)-α-olefin copolymers having a density from 0.915 g/cm³ to 0.930 g/cm³ with ethylene-vinyl acetate copolymers or ethylene-alkyl (meth)acrylate copolymers, ethylene-propylene-butene terpolymers, ethylene-alkyl acrylate-maleic anhydride ter-polymers.

12. The flexible container or the packaged product of claim 11 wherein the heat-sealing layer a) of the heat-shrinkable film comprises a heterogeneous or homogeneous ethylene-(C₄-C₈)-α-olefin copolymers having a density ≤ 0.915 g/cm³, and preferably a heterogeneous or homogeneous ethylene-(C₄-C₈)-α-olefin copolymer having a density comprised between 0.895 g/cm³ and 0,912 g/cm³.

13. The flexible container of claim 1 or the packaged product of claim 3 wherein the intermediate layer c) of the heat-shrinkable film comprises a polyamide with a melting temperature lower than 150 °C, preferably comprised between 120 °C and 150 °C.

14. The flexible container of claim 1 or the packaged product of claim 3 wherein the heat-shrinkable film further comprises an intermediate gas-barrier layer d).

15. The flexible container or the packaged product of claim 14 wherein the intermediate gas-barrier layer d) of the heat-shrinkable film comprises EVOH.

16. The flexible container or the packaged product of claim 15 wherein the intermediate gas-barrier layer d) of the heat-shrinkable film comprising EVOH is positioned between the outer abuse layer b) and the intermediate polyamide layer c).

17. The flexible container of claim 1 or the packaged product of claim 3 wherein in the heat-shrinkable film one inner tie layer is present between the intermediate layer c) and the heat-sealing layer a) and between the outer abuse layer b) and the intermediate layer c).

## Patentansprüche

1. Flexibler Behälter, hergestellt aus wärmeschrumpfbarer Folie, umfassend
a) eine äußere Heißsiegelschicht, die heißsiegelbares Polyolefin umfasst,
b) eine äußere Schutzschicht, die Polyamid mit einer Schmelztemperatur von ≥ 180°C umfasst, und
c) eine Zwischenschicht, die Polyamid mit einer Schmelztemperatur von weniger als 165°C umfasst,
wobei der Behälter mindestens einen versiegelten Bereich aufweist, der durch der Heißsiegelschicht a) gebildet ist.

2. Flexibler Behälter nach Anspruch 1 in Form eines Beutels oder einer Tasche.

3. Produkt, das mit einer wärmeschrumpfbaren Folie verpackt ist, umfassend
a) eine äußere Heißsiegelschicht, die heißsiegelbares Polyolefin umfasst,
b) eine äußere Schutzschicht, die Polyamid mit einer Schmelztemperatur von ≥ 180°C umfasst, und
c) eine Zwischenschicht, die Polyamid mit einer Schmelztemperatur von weniger als 165°C umfasst,
wobei die äußere Heißsiegelungsschicht a) die Schicht in Kontakt mit dem verpackten Produkt ist.

4. Flexibler Behälter nach Anspruch 1 oder verpacktes Produkt nach Anspruch 3, wobei das Polyamid der äußeren Schutzschicht b) der wärmeschrumpfbaren Folie eine Schmelztemperatur von 180°C bis 200°C, vorzugsweise 185°C bis 200°C und insbesondere 188°C bis 200°C hat.

5. Flexibler Behälter oder verpacktes Produkt nach Anspruch 4, wobei das Polyamid der äußeren Schutzschicht b) der wärmeschrumpfbaren Folie Polyamid ausgewählt aus der Gruppe bestehend aus Copolyamiden 6/12, Copolyamiden von Polyamid 6 und partiell aromatischem Polyamid und ternäre Copolyamide auf Basis von Polyamid 6, Polyamid 11 und Polyamid 66 umfasst.

6. Flexibler Behälter nach Anspruch 1 oder verpacktes Produkt nach Anspruch 3, wobei das Polyamid der äußeren Schutzschicht b) der wärmeschrumpfbaren Folie eine Schmelztemperatur von höher als 200°C, vorzugsweise zwischen 200°C und 250°C und insbesondere zwischen 210°C und 225°C hat.

7. Flexibler Behälter oder verpacktes Produkt nach Anspruch 6, wobei die äußere Schutzschicht b) der wärmeschrumpfbaren Folie Polyamid ausgewählt aus der Gruppe bestehend aus Polyamid 6, Polyamid-6-Copolymeren, die weniger als 5 % aromatisches Comonomer umfassen (modifiziertes Polyamid 6), Polyamid 66, Polyamiden 6/66 und Polyamiden 6/12 umfasst.

8. Flexibler Behälter oder verpacktes Produkt nach Anspruch 7, wobei die äußere Schutzschicht b) der wärmeschrumpfbaren Folie Polyamid ausgewählt aus der Gruppe bestehend aus Polyamid 6, modifiziertem Polyamid 6 und Polyamid 66 umfasst.

9. Flexibler Behälter nach Anspruch 1 oder verpacktes Produkt nach Anspruch 3, wobei die äußere Schutzschicht b) der wärmeschrumpfbaren Folie mindestens 50 % vorzugsweise mindestens 70 % und insbesondere mindestens 85 % Polyamid mit einer Schmelztemperatur von ≥ 180°C enthält.

10. Flexibler Behälter nach Anspruch 1 oder verpacktes Produkt nach Anspruch 3, wobei die Heißsiegelschicht a) der wärmeschrumpfbaren Folie ein Einzelpolyolefin oder ein Gemisch aus zwei oder mehr Polyolefinen mit einer Schmelztemperatur von < 140°C, vorzugsweise < 130°C und insbesondere zwischen 80°C und 128°C umfasst.

11. Flexibler Behälter oder verpacktes Produkt nach Anspruch 10, wobei die Heißsiegelschicht a) der wärmeschrumpfbaren Folie heterogene oder homogene Ethylen/(C₄bis C₃)-α-Olefin-Copolymere mit einer Dichte ≤ 0,915 g/cm³, Gemische davon mit geringen Mengen Polyethylenhomopolymeren, Ethylen/Vinylacetat-Copolymere, Ethylen/Acryl- oder - Methacrylsäurecopolymere einschließlich Ionomeren, Gemische heterogener oder homogener Ethylen/(C₄-Cₛ)-α-Olefin-Copolymere mit einer Dichte von 0,915 g/m³ bis 0,930 g/m³ mit Ethylen/Vinylacetat-Copolymeren oder Ethylen/Alkyl(meth)acrylat-Copolymeren, Ethylen/Propylen/Buten-Terpolymere, Ethylen/Alkylacrylat/Maleinsäureanhydrid-Terpolymere umfasst.

12. Flexibler Behälter oder verpacktes Produkt nach Anspruch 11, wobei die Heißsiegelschicht a) der wärmeschrumpfbaren Folie heterogenes oder homogenes Ethylen/(C₄- bis C₈)-α-Olefin-Copolymer mit einer Dichte ≤ 0,915 g/cm³ und vorzugsweise heterogenes oder homogenes Ethylen/(C₄- bis C₈)-α-Olefm-Copolymer mit einer Dichte zwischen 0,895 g/m³ und 0,912 g/m³ umfasst.

13. Flexibler Behälter nach Anspruch 1 oder verpacktes Produkt nach Anspruch 3, wobei die Zwischenschicht e) der wärmeschrumpfbaren Folie Polyamid mit einer Schmelztemperatur von weniger als 150°C, vorzugsweise zwischen 120°C und 150°C umfasst.

14. Flexibler Behälter nach Anspruch 1 oder verpacktes Produkt nach Anspruch 3, wobei die wärmeschrumpfbare Folie ferner eine Gasbarriere-Zwischenschicht d) umfasst.

15. Flexibler Behälter oder verpacktes Produkt nach Anspruch 14, wobei die Gasbarriere-Zwischenschicht d) der wärmeschrumpfbaren Folie EVOH umfasst.

16. Flexibler Behälter oder verpacktes Produkt nach Anspruch 15, wobei die EVOH umfassende Gasbarriere-Zwischenschicht d) der wärmeschrumpfbaren Folie zwischen der äußeren Schutzschicht b) und der Polyamidzwischenschicht c) angeordnet ist.

17. Flexibler Behälter nach Anspruch 1 oder verpacktes Produkt nach Anspruch 3, wobei in der wärmeschrumpfbaren Folie eine innere Verbindungsschicht zwischen der Zwischenschicht c) und der Heißsiegelschicht a) und zwischen der äußeren Schutzschicht b) und der Zwischenschicht c) vorhanden ist.

## Revendications

1. Conteneur flexible fait d'un film thermorétractable comprenant
a) une couche de thermoscellement externe comprenant une polyoléfine thermoscellable,
b) une couche externe anti-violation comprenant un polyamide avec une température de fusion ≥ 180 °C, et
c) une couche intermédiaire comprenant un polyamide avec une température de fusion plus faible que 165 °C, ledit conteneur ayant au moins une zone scellée formée par la couche de thermoscellement a).

2. Conteneur flexible de la revendication 1, sous la forme d'un sac ou d'une poche.

3. Produit emballé par un film termorétractable comprenant
a) une couche de thermoscellement externe comprenant une polyoléfine thermoscellable,
b) une couche externe anti-violation comprenant un polyamide avec une température de fusion ≥ 180 °C, et
c) une couche intermédiaire comprenant un polyamide avec une température de fusion plus faible que 165 °C,
où la couche de thermoscellement externe a) est la couche en contact avec le produit emballé.

4. Conteneur flexible de la revendication 1 ou produit emballé de la revendication 3, où le polyamide de la couche externe anti-violation b) du film thermorétractable a une température de fusion de 180 °C à 200 °C, de préférence de 185 °C à 200 °C et encore mieux de 188 °C à 200 °C.

5. Conteneur flexible ou produit emballé de la revendication 4, où la couche externe anti-violation b) du film thermorétractable comprend un polyamide sélectionné dans le groupe consistant en copolyamides 6/12, copolyamides de polyamide 6 et un polyamide partiellement aromatique et copolyamides ternaires à base de polyamide 6, polyamide 11 et polyamide 66.

6. Conteneur flexible de la revendication 1 ou produit emballé de la revendication 3, où le polyamide de la couche externe anti-violation b) du film thermorétractable a une température de fusion supérieure à 200 °C, de préférence comprise entre 200 °C et 250 °C, et mieux comprise entre 210 °C et 225 °C.

7. Conteneur flexible ou produit emballé de la revendication 6, où la couche externe anti-violation b) du film thermorétractable comprend un polyamide sélectionné dans le groupe consistant en polyamide 6, copolymères de polyamide 6 comprenant moins de 5 % d'un co-monomère aromatique (polyamide 6 modifié), polyamide 66, polyamides 6/66, et polyamides 6/12.

8. Conteneur flexible ou produit emballé de la revendication 7, où la couche externe anti-violation b) du film thermorétractable comprend un polyamide sélectionné dans le groupe consistant en polyamide 6, polyamide 6) modifié, et polyamide 66.

9. Conteneur flexible de la revendication 1 ou produit emballé de la revendication 3, où la couche externe anti-violation b) du film thermorétractable contient au moins 50 %, de préférence au moins 70 %, et mieux au moins 85 % d'un polyamide avec une température de fusion ≥ 180 °C.

10. Conteneur flexible de la revendication 1 ou produit emballé de la revendication 3, où la couche de thermoscellement a) du film thermorétractable comprend une seule polyoléfine ou un mélange de deux ou plusieurs polyoléfines avec une température de fusion < 140 °C, de préférence < 130 °C, et mieux comprise entre 80 °C et 128 °C.

11. Conteneur flexible ou produit emballé de la revendication 10, où la couche de thermoscellement a) du film thermorétractable comprend des copolymères hétérogènes ou homogènes d'éthylène-α-oléfine (C₄-C₈) ayant une densité ≤ 0,915 g/cm³, leurs mélanges avec une quantité mineure d'homopolymères de polyéthylène, copolymères d'éthylène-acétate de vinyle, copolymères d'éthylène-acide acrylique ou méthacrylique comprenant des ionomères, mélanges de copolymères hétérogènes ou homogènes d'éthylène-α-oléfine en (C4 - C8) ayant une densité de 0,915 g/cm³ à 0,930 g/cm³ avec des copolymères d'éthylène-acétate de vinyle ou copolymères d'éthylène-(méth)acrylate d'alkyle, terpolymères d'éthylène-propylène-butène, terpolymères d'éthylène-acrylate d'alkyle-anhydride maléique.

12. Conteneur flexible ou produit emballé de la revendication 11, où la couche de thermoscellement a) du film thermorétractable comprend des copolymères hétérogènes ou homogènes d'éthylène-α-oléfine (C4-C₈) ayant une densité ≤ 0,915 g/cm³, et de préférence un copolymère hétérogène ou homogène d'éthylène-α-oléfine (C₄-C8) ayant une densité comprise entre 0,895 g/cm³ et 0,912 g/cm³.

13. Conteneur flexible de la revendication 1 ou produit emballé de la revendication 3, où la couche intermédiaire c) du film thermorétractable comprend un polyamide avec une température de fusion plus faible que 150 °C, de préférence comprise entre 120 °C et 150 °C.

14. Conteneur flexible de la revendication 1 ou produit emballé de la revendication 3, où le film thermorétractable comprend de plus une couche formant barrière contre les gaz intermédiaire d).

15. Conteneur flexible ou produit emballé de la revendication 14, où la couche formant barrière contre les gaz intermédiaire d) du film thermorétractable comprend EVOH.

16. Conteneur flexible ou produit emballé de la revendication 15, où la couche formant barrière contre les gaz intermédiaire d) du film thermorétractable comprenant EVOH est placée entre la couche externe anti-violation b) et la couche de polyamide intermédiaire c).

17. Conteneur flexible de la revendication 1 ou produit emballé de la revendication 3, où dans le film thermorétractable une couche interne d'attache est présente entre la couche intermédiaire c) et la couche de thermoscellement a) et entre la couche externe anti-violation b) et la couche intermédiaire c).
